# EUROPEAN PATENT SPECIFICATION

(11) **EP 0 736 768 B1**
(45) Date of publication and mention of the grant of the patent: **15.10.2008**
(21) Application number: 96105240.4
(22) Date of filing: 02.04.1996
(51) Int. Cl.: G01N 21/75, G01N 27/00, C07C 69/653

(54) **Polymer films for detecting organic gases**
Polymerfilme zum Nachweis von organischen Gasen
Films de polymère pour la détection des gaz organiques

(30) Priority: 05.04.1995 JP 8039595
(43) Date of publication of application: 09.10.1996
(73) Proprietor: O.S.P. Inc., 2-14 Higashi-Mitsuki Sayama-shi Saitama 350-1302 (JP)
(72) Inventor: Arai, Masayuki, Gyoda shi, Saitama (JP)
(74) Representative: Luderschmidt, Schüler & Partner

(56) References cited:
- EP-A- 0 300 661
- EP-A- 0 598 340
- EP-A- 0 598 341
- US-A- 5 015 843
- US-A- 5 152 287
- PATENT ABSTRACTS OF JAPAN vol. 014, no. 504 (P-1127), 5 November 1990 & JP 02 210253 A (SANYO ELECTRIC), 21 August 1990, -& DATABASE WPI Section Ch, Week 9025 Derwent Publications Ltd., London, GB; Class A89, AN 90-295778 XP002048575

## Description

This invention relates to an optically detecting organic gas sensor.

Optical sensors are known from EP-A-0598340 and EP-A-0598341. Both, EP-A-0598340 and EP-A-0598341, refer to an optical sensor for detecting gaseous or liquid chemical species using transparent thin organic or inorganic films or high-polymer films.

Further, US-A-5152287refers to a method of analysing inorganic gases and a sensor having a polymer which is highly fluorinated.

EP-A-0300661 refers to pellicle polymer film having a reflection-preventive layer which is used as a dust-proof cover for a photomask or reticule. The polymer film is made from specific polyfluoro(meth)acrylate.

JP-A-2210253 refers to a moisture sensitive film from a copolymer having an acrylamide derivative as a structural monomer component.

The sensing portion of organic gas sensors using polymers is sensitive not only to the organic gases to be measured but also to the moisture in air and issues a signal. This is due to the fact that the polymers as the sensing materials also adsorb the moisture in air. For example, organic gas sensors using ordinary polymethacrylate esters sense a relative humidity of 50% and issue a signal equivalent to several hundred ppm of an organic gas (when the organic gas is toluene). The issuing of signals due to such humidity changes can be a cause of wrong operations (erroneous warning) during measurements for a time period that is long enough to potentially experience humidity changes.

An object of the present invention is to reduce the issuing of signals due to humidity changes during the measurement of organic gases with organic gas sensors.

This object of the invention can be attained by using fluorine-containing polymers as materials for organic gas sensors such that the effect of humidity is reduced. Stated The present invention provides an optically detecting organic gas sensor as described in claim 1. Further embodiments are described in claims 2-5.

Fig. 1 shows schematically an organic gas sensor operating on an IER method;
Fig. 2 is a graph showing how sensors using fluorine-containing polymers were sensitive to toluene (1000 ppm) and humidified air; and
Fig. 3 is a graph showing how sensors using fluorine-free polymers were sensitive to toluene (1000 ppm) and humidified air.

The organic gas sensor of the invention can be used in the measurement of various organic gases including, for example, aromatic gases such as benzene, toluene and xylene, aliphatic hydrocarbon gases such as hexane, ketones such as acetone, as well as alcohols, ethers, etc.

The materials prepared as described above are coated over silicon wafers in thicknesses of 200 - 600 nm and combined with an LED (light emitting diode) and a PD (photo diode) to fabricate IER (interference enhanced reflection) sensors, which may be used to detect gases with reduced effects of humidity.

Preferred polymers for use in the invention include polymethacrylate esters and polyacrylate esters. One of the two side-chain groups in the esters is preferably a straight-chained or branched alkyl group or a cycloalkyl group, with the number of carbon atoms being preferably from 4 to 22, and the other side-chain group is one of these alkyl groups, except that they are substituted by one or more F atoms.

The following compounds may be mentioned as examples of the preferred polymers for use in the invention.
Poly(butyl methacrylate-co-1,1,1,3,3,3-hexafluoroisopropyl methacrylate);
Poly(cyclohexyl methacrylate-co-1,1,1,3,3,3-hexafluoroisopropyl methacrylate);
Poly(2-ethylhexyl methacrylate-co-1,1,1,3,3,3-hexafluoroisopropyl methacrylate);
Poly(dodecyl methacrylate-co-1,1,1,3,3,3-hexafluoroisopropyl methacrylate);
Poly(octadecyl methacrylate-co-1,1,1,3,3,3-hexafluoroisopropyl methacrylate);
Poly(benzyl methacrylate-co-1,1,1,3,3,3-hexafluoroisopropyl methacrylate);
Poly(glycidyl methacrylate-co-1,1,1,3,3,3-hexafluoroisopropyl methacrylate);
Poly(butyl methacrylate-co-2,2,2-trifluoroethyl methacrylate);
Poly(cyclohexyl methacrylate-co-2,2,2-trifluoroethyl methacrylate);
Poly(2-ethylhexyl methacrylate-co-2,2,2-trifluoroethyl methacrylate);
Poly(dodecyl methacrylate-co-2,2,2-trifluoroethyl methacrylate);
Poly(octadecyl methacrylate-co-2,2,2-trifluoroethyl methacrylate);
Poly(benzyl methacrylate-co-2,2,2-trifluoroethyl methacrylate);
Poly(glycidyl methacrylate-co-2,2,2-trifluoroethyl methacrylate);
Poly(butyl methacrylate-co-perfluorooctylethyl methacrylate);
Poly(cyclohexyl methacrylate-co-perfluorooctylethyl methacrylate);
Poly(2-ethylhexyl methacrylate-co-perfluorooctylethyl methacrylate);
Poly(dodecyl methacrylate-co-perfluorooctylethyl methacrylate);
Poly(octadecyl methacrylate-co-perfluorooctylethyl methacrylate);
Poly(benzyl methacrylate-co-perfluorooctylethyl methacrylate);
Poly(glycidyl methacrylate-co-perfluorooctylethyl methacrylate);
Poly(butyl methacrylate-co-2,2,3,3,4,4-hexafluorobutyl methacrylate);
Poly(cyclohexyl methacrylate-co-2,2,3,3,4,4-hexafluorobutyl methacrylate);
Poly(dodecyl methacrylate-co-2,2,3,3,4,4-hexafluorobutyl methacrylate);
Poly(octadecyl methacrylate-co-2,2,3,3,4,4-hexafluorobutyl methacrylate);
Poly(benzyl methacrylate-co-2,2,3,3,4,4-hexafluorobutyl methacrylate);
Poly(glycidyl methacrylate-co-2,2,3,3,4,4-hexafluorobutyl methacrylate);
Poly(butyl methacrylate-co-perfluorohexylethyl methacrylate); Poly(cyclohexyl methacrylate-co-perfluorohexylethyl methacrylate);
Poly(2-ethylhexyl methacrylate-co-perfluorohexylethyl methacrylate);
Poly(dodecyl methacrylate-co-perfluorohexylethyl methacrylate);
Poly(octadecyl methacrylate-co-perfluorohexylethyl methacrylate);
Poly(benzyl methacrylate-co-perfluorohexylethyl methacrylate);
Poly(glycidyl methacrylate-co-perfluorohexylethyl methacrylate);
Poly(butyl methacrylate-co-1,1,1,3,3,3-hexafluoroisopropyl acrylate);
Poly(cyclohexyl methacrylate-co-1,1,1,3,3,3-hexafluoroisopropyl acrylate);
Poly(2-ethylhexyl methacrylate-co-1,1,1,3,3,3-hexafluoroisopropyl acrylate);
Poly(dodecyl methacrylate-co-1,1,1,3,3,3-hexafluoroisopropyl acrylate);
Poly(octadecyl methacrylate-co-1,1,1,3,3,3-hexafluoroisopropyl acrylate);
Poly(benzyl methacrylate-co-1,1,1,3,3,3-hexafluoroisopropyl acrylate);
Poly(glycidyl methacrylate-co-1,1,1,3,3,3-hexafluoroisopropyl acrylate);
Poly(butyl methacrylate-co-2,2,2-trifluoroethyl acrylate);
Poly(cyclohexyl methacrylate-co-2,2,2-trifluoroethyl acrylate);
Poly(2-ethylhexyl methacrylate-co-2,2,2-trifluoroethyl acrylate);
Poly(dodecyl methacrylate-co-2,2,2-trifluoroethyl acrylate);
Poly(octadecyl methacrylate-co-2,2,2-trifluoroethyl acrylate);
Poly(benzyl methacrylate-co-2,2,2-trifluoroethyl acrylate);
Poly(glycidyl methacrylate-co-2,2,2-trifluoroethyl acrylate);
Poly(butyl methacrylate-co-perfluorohexylethyl acrylate);
Poly(cyclohexyl methacrylate-co-perfluorohexylethyl acrylate);
Poly(2-ethylhexyl methacrylate-perfluorohexylethyl acrylate);
Poly(dodecyl methacrylate-co-perfluorohexylethyl acrylate);
Poly(octadecyl methacrylate-co-perfluorohexylethyl acrylate);
Poly(benzyl methacrylate-co-perfluorohexylethyl acrylate); and
Poly(glycidyl methacrylate-co-perfluorohexylethyl acrylate).

Any known film-forming methods may be employed to make films from the polymers listed above and exemplary methods include spin coating, the casting of polymer solutions, melt extrusion, etc. For increased detection sensitivity, the film thickness is desirably as small as possible, typically being 1 µm and less. Therefore, film-forming methods capable of reducing the film thickness are desirable, with spin coating being especially desirable.

The fluorine-containing polymers of the invention adsorb less moisture than any other polymers that are suitable for use in organic gas sensors but they can adsorb comparable amounts of organic gases. In other words, the adsorption of organic gases is increased relative to the adsorption of moisture. Since this adsorption ratio corresponds to the signal issued from detectors using the materials under discussion, the signal due to the humidity changes that occur during the measurement of organic gases is reduced.

### Examples

The present invention will now be described in greater detail by reference to examples.

### Example 1

13.88 Grams (0.07 mol) of 2-ethylhexyl methacrylate, 12.97 gram (0.03 mol) of perfluorohexylethyl methacrylate and 164 milligrams of azobisisobutyronitrile (AIBN) were dissolved in 100 milliliters of tetrahydrofuran at 20°C. The resulting solution was purged with nitrogen for 1 h. Then, the solution was heated under reflux for 65°C for 4 h. During the refluxing, the solution was purged with nitrogen to prevent contamination with oxygen. The solution was cooled to 20°C and subsequently poured into 2 liters of methanol, whereupon poly(2-ethylhexyl methacrylate-co-perfluorohexylethyl methacrylate) precipitated. In order to further enhance its purity, the poly(2-ethylhexyl methacrylate-co-perfluorohexylethyl methacrylate) was dissolved in 50 milliliters of tetrahydrofuran and then precipitated in 1 liter of methanol. Finally, the viscous poly(2-ethylhexyl methacrylate-co-perfluorohexylethyl methacrylate) was trapped and dried in vacuo at 60°C. After the drying, thin-layer chromatographic testing was conducted to detect any residual monomers in the resulting poly(2-ethylhexyl methacrylate-co-perfluorohexylethyl methacrylate); no residual monomer was contained in the poly(2-ethylhexyl methacrylate-co-perfluorohexylethyl methacrylate). Eventually, colorless and clear poly(2-ethylhexyl methacrylate-co-perfluorohexylethyl methacrylate) was obtained in an amount of 18 grams. The refractive index of this poly(2-ethylhexyl methacrylate-co-perfluorohexylethyl methacrylate) was measured with a three-wavelength ellipsometer Auto EL IV NIR III of Rudolph Research; the result was 1.420 at 23°C.

### Example 2

### Preparing Thin Film of Poly(octadecyl methacrylate-co-perfluorohexylethyl methacrylate)

A fluorine-containing polymer, or poly(octadecyl methacrylate-co-perfluorohexylethyl methacrylate) was dissolved in toluene to make a solution having a concentration of 5 - 10%. The solution was then spin-coated onto a silicon substrate. After the spin coating, the film was dried in vacuo at 60°C for 2 h. The thickness of the thus formed film was measured with a DEKTAK 3030ST surface texture analyzing system of Solan Technology Corp. To achieve a maximum detection sensitivity, the polymer film should have a thickness less than 1 micrometer, which was typically about 500 nm.

### Example 3

### Detecting Organic Gases by Interference Enhanced Reflection and Testing for the Effect of Humidity

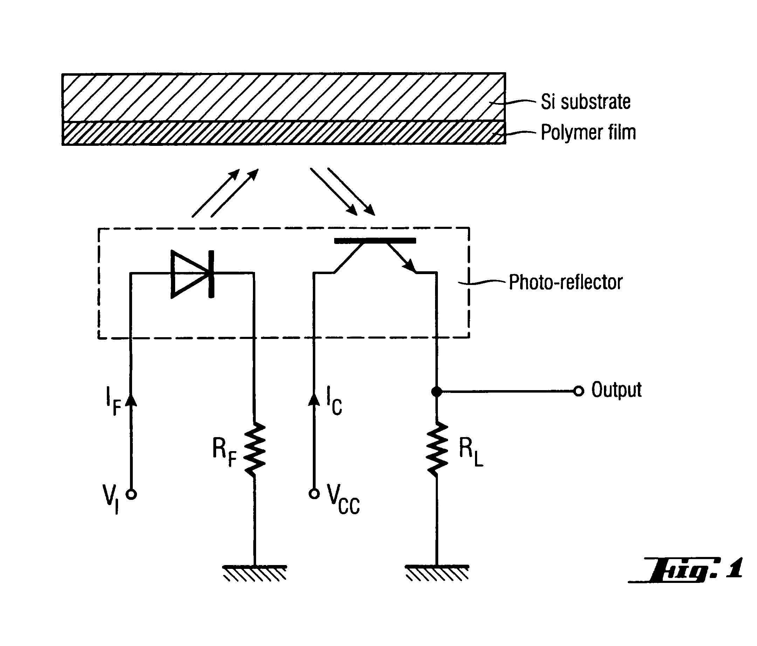

Organic gas detecting polymer films according to the invention were used to fabricate an organic gas detector as shown in Fig. 1. Using this detector, toluene and other hydrocarbons were detected optically at room temperature by an interference enhanced reflection (IER) method to examine the effect of humidity on the detection.

In the test, review was made by comparing the fluorine-containing polymers of the invention with polymers used in the conventional method of detecting organic gases.

During the measurement by IER, the silicon substrates having the polymer films under test were sealed within a flow-through cell, into which the toluene vapor and other organic gases or water vapor could be introduced together with air or nitrogen.

These gases were generated from a gas permeator (GASTEC Corp.) or a gas calibrator (Riken Keiki Co., Ltd.) and trapped in a Teflon gas bag. The organic gas used in Example 3 was toluene.

To investigate the effects of humidity, air was passed through a GORE-TEX tube submerged in water so that it would be humidified to about 90%. A signal for the thus humidified air was measured and compared with the signal for 1000 ppm of toluene to determine the toluene to humidified air signal ratio.

He-Ne laser light was admitted to each of the polymer films at an incident angle of 70 degrees. The laser light was found to be polarized at right angles to the entrance plane. The intensity of the reflected light was monitored with the photodetector and its output was measured with a voltmeter.

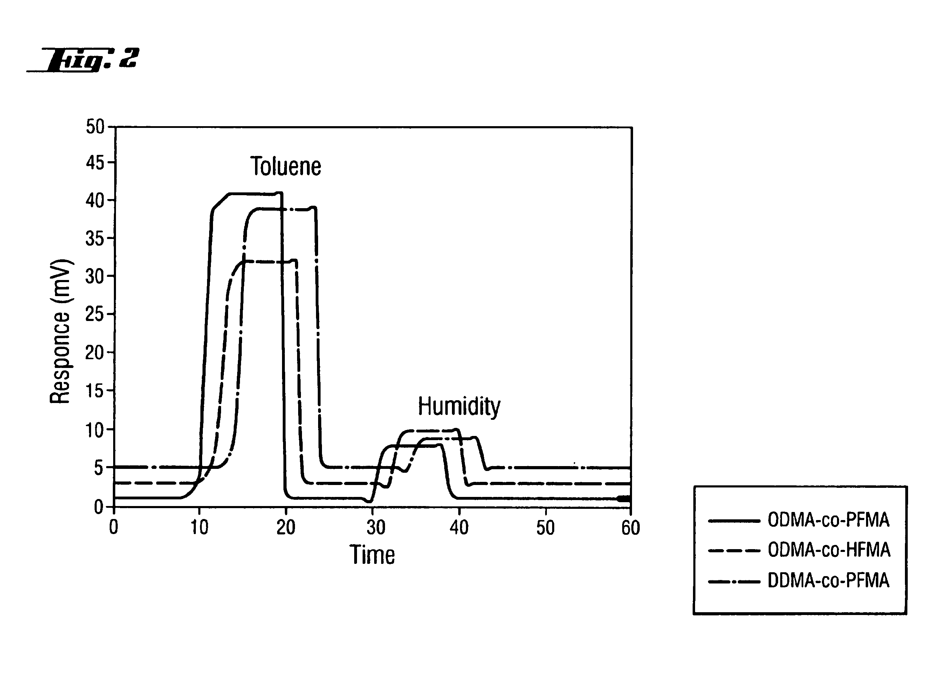

The results of the measurement are shown in Table 1. The sensitivity values in Table 1 represent the output voltages from the apparatus shown in Fig. 1. As one can see from Table 1, the sensors using the fluorine-containing polymers of the invention issued signals equivalent to about 10 - 25 ppm of toluene in response to a 10% humidity variation. The reaction curves obtained in the measurement are shown in Fig. 2. The measurement was first made on 1000 ppm of toluene, then on air humidified to 90% RH.

**Table 1**

| Polymer | Toluene | Humidified air | Ratio |
|---|---|---|---|
| | (1000 ppm) | (90% RH) | (Toluene/Humidified air) |
| ODMA-co-PFMA | 40 | 8 | 5 |
| ODMA-co-HFMA | 29 | 7 | 4.1 |
| DDMA-co-PFMA | 34 | 4 | 8.5 |

The designations in the table represent the following polymers.
- OMDA-co-PFMA:: Poly(octadecyl methacrylate-co-perfluorohexylethyl methacrylate)
- OMDA-co-HFMA:: Poly(octadecyl methacrylate-co-1,1,1,3,3,3-hexafluoroisopropyl acrylate)
- DMDA-co-PFMA:: Poly(dodecyl methacrylate-co-perfluorohexylethyl methacrylate)

### Comparative Example 1

A comparative test was conducted in order to examine how much of the effect of humidity was reduced by the sensors using the fluorine-containing polymers of the invention as compared to sensors using fluorine-free polymers. Two fluorine-free polymers, poly(2-ethylhexyl methacrylate) and poly(octadecyl methacrylate), were used and comparison was made by means of an apparatus as shown in Fig. 1 operating on the interference enhanced reflection (IER) method using the same gas and conditions of measurement as in Example 3.

The results of the comparison are shown in Table 2. The sensitivity values in Table 2 represent the output voltages from the apparatus shown in Fig. 1.

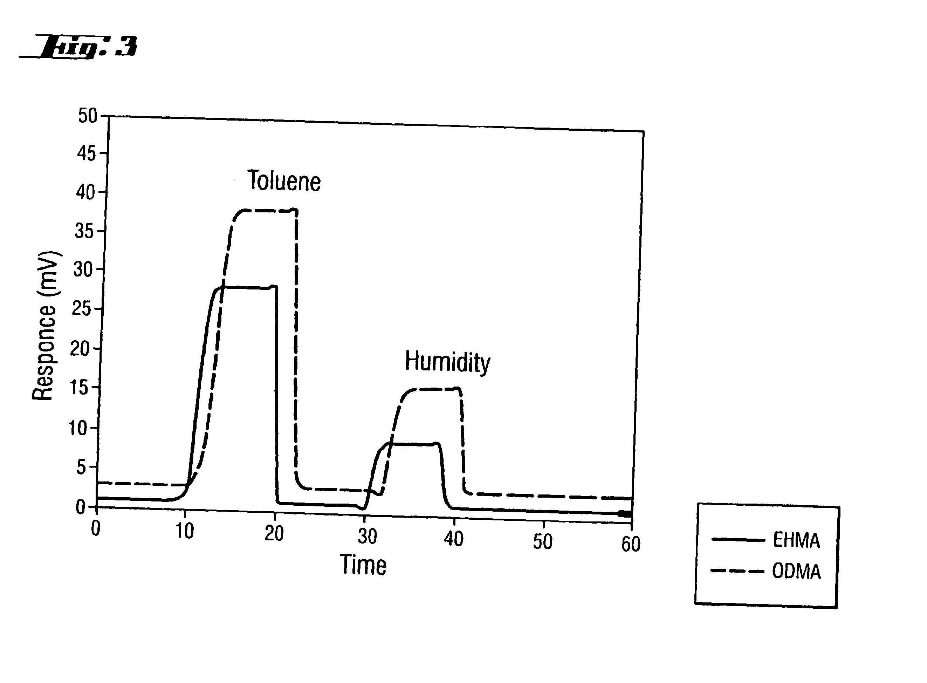

The sensors using the fluorine-free polymers issued signals equivalent to about 30 - 40 ppm of toluene in response to a 10% humidity variation. Comparing the data in Table 2 with the results of Example 3, one can clearly see that the sensors using the fluorine-containing polymers recited in the appended claims produced higher toluene/humidified air ratios than the sensors using the fluorine-free polymers. Obviously, the effect of humidity on the signal for organic gases was reduced. The reaction curves obtained in the measurement are shown in Fig. 3.

**Table 2**

| Polymer | Toluene | Humidified air | Ratio |
|---|---|---|---|
| | (1000 ppm) | (90% RH) | (Toluene/Humidified air) |
| EHMA | 28 | 9 | 3.1 |
| ODMA | 35 | 13 | 2.7 |

The designations in the table represent the following polymers.
- EHMA:: Poly(2-ethylhexyl methacrylate)
- ODMA:: Poly(octadecyl methacrylate)

## Claims

1. An optically detecting organic gas sensor comprising a film on a smooth substrate that will experience changes in film thickness and/or refractive index upon contact with organic gases, as well as a light source and a photodetector device, **characterised in that:**
the film comprises a polymethacrylate-co-fluoromethacrylate or polymethacrylate-co-fluoroacrylate polymer, wherein one of the two side-chain groups in the esters is a straight-chained or branched alkyl group or a cycloalkyl group, else benzyl or glycidyl, and the other side-chain is a straight-chained or branched alkyl group, which is substituted by one or more F atoms.

2. The gas sensor of claim 1, the number of carbon atoms in the side-chain group being from 4 to 22.

3. The gas sensor of one of claims 1 to 2, wherein the polymer is selected from the group consisting of:
Poly(butyl methacrylate-co-1,1,1,3,3,3-hexafluoroisopropyl methacrylate);
Poly(cyclohexyl methacrylate-co-1,1,1,3,3,3-hexafluoro-isopropyl methacrylate);
Poly(2-ethylhexyl methacrylate-co-1,1,1,3,3,3-hexafluoro-isopropyl methacrylate);
Poly(dodecyl methacrylate-co-1,1,1,3,3,3-hexafluoroisopropyl-methacrylate);
Poly(octadecyl methacrylate-co-1,1,1,3,3,3-hexafluoroisopropylmethacrylate);
Poly(benzyl methacrylate-co-1,1,1,3,3,3-hexafluoroisopropyl-methacrylate) ;
Poly(glycidyl methacrylate-co-1,1,1,3,3,3-hexafluoroisopropylmethacrylate);
Poly(butyl methacrylate-co-2,2,2-trifluoroethyl methacrylate);
Poly(cyclohexyl methacrylate-co-2,2,2-trifluoroethylmethacrylate);
Poly(2-ethylhexyl methacrylate-co-2,2,2-trifluoroethylmethacrylate);
Poly(dodecyl methacrylate-co-2,2,2-trifluoroethylmethacrylate);
Poly(octadecyl methacrylate-co-2,2,2-trifluoroethylmethacrylate);
Poly(benzyl methacrylate-co-2,2,2-trifluoroethylmethacrylate);
Poly(glycidyl methacrylate-co-2,2,2-trifluoroethylmethacrylate);
Poly(butyl methacrylate-co-perfluorooctylethyl methacrylate);
Poly(cyclohexyl methacrylate-co-perfluorooctylethylmethacrylate);
Poly (2-ethylhexyl methacrylate-co-perfluorooctylethylmethacrylate);
Poly(dodecyl methacrylate-co-perfluorooctylethylmethacrylate);
Poly(octadecyl methacrylate-co-perfluorooctylethylmethacrylate);
Poly(benzyl methacrylate-co-perfluorooctylethyl methacrylate);
Poly(glycidyl methacrylate-co-perfluorooctylethylmethacrylate);
Poly(butyl methacrylate-co-2,2,3,3,4,4-hexafluorobutylmethacrylate);
Poly(cyclohexyl methacrylate-co-2,2,3,3,4,4-hexafluorobutylmethacrylate);
Poly(dodecyl methacrylate-co-2,2,3,3,4,4-hexafluorobutylmethacrylate);
Poly(octadecyl methacrylate-co-2,2,3,3,4,4-hexafluorobutylmethacrylate);
Poly(benzyl methacrylate-co-2,2,3,3,4,4-hexafluorobutylmethacrylate);
Poly(glycidyl methacrylate-co-2,2,3,3,4,4-hexafluorobutylmethacrylate);
Poly(butyl methacrylate-co-perfluorohexylethyl methacrylate);
Poly(cyclohexyl methacrylate-co-perfluorohexylethylmethacrylate);
Poly(2-ethylhexyl methacrylate-co-perfluorohexylethylmethacrylate);
Poly(dodecyl methacrylate-co-perfluorohexylethyl methacrylate);
Poly(octadecyl methacrylate-co-perfluorohexylethyl methacrylate);
Poly(benzyl methacrylate-co-perfluorohexylethyl methacrylate);
Poly(glycidyl methacrylate-co-perfluorohexylethylmethacrylate);
Poly(butyl methacrylate-co-1,1,1,3,3,3-hexafluoroisopropylacrylate);
Poly(cyclohexyl methacrylate-co-1,1,1,3,3,3-hexafluoroisopropylacrylate);
Poly(2-ethylhexyl methacrylate-co-1,1,1,3,3,3-hexafluoroisopropylacrylate);
Poly(dodecyl methacrylate-co-1,1,1,3,3,3-hexafluoroisopropylacrylate);
Poly(octadecyl methacrylate-co-1,1,1,3,3,3-hexafluoroisopropyl acrylate);
Poly(benzyl methacrylate-co-1,1,1,3,3,3-hexafluoroisopropylacrylate);
Poly(glycidyl methacrylate-co-1,1,1,3,3,3-hexafluoroisopropylacrylate);
Poly(butyl methacrylate-co-2,2,2-trifluoroethyl acrylate);
Poly(cyclohexyl methacrylate-co-2,2,2-trifluoroethyl acrylate);
Poly(2-ethylhexyl methacrylate-co-2,2,2-trifluoroethyl acrylate);
Poly(dodecyl methacrylate-co-2,2,2-trifluoroethyl acrylate);
Poly(octadecyl methacrylate-co-2,2,2-trifluoroethyl acrylate);
Poly(benzyl methacrylate-co-2,2,2-trifluoroethyl acrylate);
Poly(glycidyl methacrylate-co-2,2,2-trifluoroethyl acrylate);
Poly(butyl methacrylate-co-perfluorohexylethyl acrylate);
Poly(cyclohexyl methacrylate-co-perfluorohexylethyl acrylate);
Poly(2-ethylhexyl methacrylate-perfluorohexylethyl acrylate);
Poly(dodecyl methacrylate-co-perfluorohexylethyl acrylate);
Poly(octadecyl methacrylate-co-perfluorohexylethyl acrylate);
Poly(benzyl methacrylate-co-perfluorohexylethyl acrylate); and
Poly(glycidyl methacrylate-co-perfluorohexylethyl acrylate).

4. The gas sensor of claim 3, the group of polymers consisting of Poly(octadecyl methacrylate-co-perfluorohexylethyl methacrylate); Poly(octadecyl methacrylate-co-1,1,1,3,3,3-hexafluoroisopropyl acrylate); Poly(dodecyl methacrylate-co-perfluorohexylethyl methacrylate).

5. The gas sensor of according to one or more of claims 1 to 5 wherein the polymer is crosslinked.

6. The use of an organic gas sensor, according to claims 1 to 5, for analysing organic gases based on interference enhanced reflection (IER).

## Patentansprüche

1. Optisch erkennender Sensor für organisches Gas, aufweisend einen Film auf einem glatten Substrat, welcher Veränderungen in Filmdicke und/oder Brechungsindex bei Kontakt mit organischen Gasen erfährt, sowie eine Lichtquelle und eine Photodetektorvorrichtung, **dadurch gekennzeichnet, dass:**
der Film ein Polymethacrylat-co-Fluormethacrylat- oder Polymethacrylat-co-Fluoracrylat-Polymer aufweist, wobei eine der beiden Seitenkettengruppen in den Estern eine geradkettige oder verzweigte Alkylgruppe oder eine Cycloalkylgruppe ist, weiterhin auch noch Benzyl oder Glycidyl, und die andere Seitenkette eine geradkettige oder verzweigte Alkylgruppe ist, die durch ein oder mehrere F-Atome substituiert ist.

2. Gassensor nach Anspruch 1, wobei die Anzahl der Kohlenstoffatome in der Seitenkettengruppe von 4 bis 22 ist.

3. Gassensor nach einem der Ansprüche 1 bis 2, wobei das Polymer ausgewählt wird aus der Gruppe bestehend aus:
Poly(butylmethacrylat-co-1,1,1,3,3,3-hexafluorisopropylmethacrylat),
Poly(cyclohexylmethacrylat-co-1,1,1,3,3,3-hexafluorisopropylmethacrylat),
Poly(2-ethylhexylmethacrylat-co-1,1,1,3,3,3-hexafluorisopropylmethacrylat),
Poly(dodecylmethacrylat-co-1,1,1,3,3,3-hexafluorisopropylmethacrylat),
Poly(octadecylmethacrylat-co-1,1,1,3,3,3-hexafluorisopropylmethacrylat),
Poly(benzylmethacrylat-co-1,1,1,3,3,3-hexafluorisopropylmethacrylat),
Poly(glycidylmethacrylat-co-1,1,1,3,3,3-hexafluorisopropylmethacrylat),
Poly(butylmethacrylat-co-2,2,2-trifluorethylmethacrylat),
Poly(cyclohexylmethacrylat-co-2,2,2-trifluorethylmethacrylat),
Poly(2-ethylhexylmethacrylat-co-2,2,2-trifluorethylmethacrylat),
Poly(dodecylmethacrylat-co-2,2,2-trifluorethylmethacrylat),
Poly(octadecylmethacrylat-co-2,2,2-trifluorethylmethacrylat),
Poly(benzylmethacrylat-co-2,2,2-trifluorethylmethacrylat),
Poly(glycidylmethacrylat-co-2,2,2-trifluorethylmethacrylat),
Poly(butylmethacrylat-co-perfluoroctylethylmethacrylat),
Poly(cyclohexylmethacrylat-co-perfluoroctylethylmethacrylat),
Poly(2-ethylhexylmethacrylat-co-perfluoroctylethylmethacrylat),
Poly(dodecylmethacrylat-co-perfluoroctylethylmethacrylat),
Poly(octadecylmethacrylat-co-perfluoroctylethylmethacrylat),
Poly(benzylmethacrylat-co-perfluoroctylethylmethacrylat),
Poly(glycidylmethacrylat-co-perfluoroctylethylmethacrylat),
Poly(butylmethacrylat-co-2,2,3,3,4,4-hexafluorbutylmethacrylat),
Poly(cyclohexylmethacrylat-co-2,2,3,3,4,4-hexafluorbutylmethacrylat),
Poly(dodecylmethacrylat-co-2,2,3,3,4,4-hexafluorbutylmethacrylat),
Poly(octadecylmethacrylat-co-2,2,3,3,4,4-hexafluorbutylmethacrylat),
Poly(benzylmethacrylat-co-2,2,3,3,4,4-hexafluorbutylmethacrylat),
Poly(glycidylmethacrylat-co-2,2,3,3,4,4-hexafluorbutylmethacrylat),
Poly(butylmethacrylat-co-perfluorhexylethylmethacrylat),
Poly(cyclohexylmethacrylat-co-perfluorhexylethylmethacrylat),
Poly(2-ethylhexylmethacrylat-co-perfluorhexylethylmethacrylat),
Poly(dodecylmethacrylat-co-perfluorhexylethylmethacrylat),
Poly(octadecylmethacrylat-co-perfluorhexylethylmethacrylat),
Poly(benzylmethacrylat-co-perfluorhexylethylmethacrylat),
Poly(glycidylmethacrylat-co-perfluorhexylethylmethacrylat),
Poly(butylmethacrylat-co-1,1,1,3,3,3-hexafluorisopropylacrylat),
Poly(cyclohexylmethacrylat-co-1,1,1,3,3,3-hexafluorisopropylacrylat),
Poly(2-ethylhexylmethacrylat-co-1,1,1,3,3,3-hexafluorisopropylacrylat),
Poly(dodecylmethacrylat-co-1,1,1,3,3,3-hexafluorisopropylacrylat),
Poly(octadecylmethacrylat-co-1,1,1,3,3,3-hexafluorisopropylacrylat),
Poly(benzylmethacrylat-co-1,1,1,3,3,3-hexafluorisopropylacrylat),
Poly(glycidylmethacrylat-co-1,1,1,3,3,3-hexafluorisopropylacrylat),
Poly(butylmethacrylat-co-2,2,2-trifluorethylacrylat),
Poly(cyclohexylmethacrylat-co-2,2,2-trifluorethylacrylat),
Poly(2-ethylhexylmethacrylat-co-2,2,2-trifluorethylacrylat),
Poly(dodecylmethacrylat-co-2,2,2-trifluorethylacrylat),
Poly(octadecylmethacrylat-co-2,2,2-trifluorethylacrylat),
Poly(benzylmethacrylat-co-2,2,2-trifluorethylacrylat),
Poly(glycidylmethacrylat-co-2,2,2-trifluorethylacrylat),
Poly(butylmethacrylat-co-perfluorhexylethylacrylat),
Poly(cyclohexylmethacrylat-co-perfluorhexylethylacrylat),
Poly(2-ethylhexylmethacrylat-perfluorhexylethylacrylat),
Poly(dodecylmethacrylat-co-perfluorhexylethylacrylat),
Poly(octadecylmethacrylat-co-perfluorhexylethylacrylat),
Poly(benzylmethacrylat-co-perfluorhexylethylacrylat) und
Poly(glycidylmethacrylat-co-perfluorhexylethylacrylat).

4. Gassensor nach Anspruch 3, wobei die Gruppe aus Polymeren aus Poly(octadecylmethacrylat-co-perfluorhexylethylmethacrylat), Poly(octadecylmethacrylat-co-1,1,1,3,3,3-hexafluorisopropylacrylat), Poly(docecylmethacrylat-co-perfluorhexylethylmethacrylat) besteht.

5. Gassensor gemäß einem oder mehreren der Ansprüche 1 bis 5, wobei das Polymer vernetzt ist.

6. Verwendung des organischen Gassensors gemäß Ansprüchen 1 bis 5 zur Analyse von organischen Gasen, basierend auf interferenzverstärkter Reflektion (IER).

## Revendications

1. Un capteur de détection optique de gaz organique comprenant un film sur un substrat lisse qui sera passé par changements dans l'épaisseur du film et/ou dans l'indice de réfraction au contact avec les gaz organiques, aussi bien qu'à la source de lumière et un dispositif photodétecteur, **caractérisé en ce que** le film comprend le polymère de polyméthacrylate-co-fluorométhacrylate ou de polyméthacrylate-co-fluoroacrylate, où l'un d'entre les deux groupes à chaîne latérale dans les esters est un groupe alkyle à chaîne normale ou ramifiée ou un groupe cycloalkyle, de plus benzyle ou glycidyle, et l'autre chaîne latérale est un groupe alkyle à chaîne normale ou ramifiée qui est substitué par un ou plusieurs atomes F.

2. Le capteur de gaz selon la revendication 1, le nombre d'atomes de carbone dans le groupe à chaîne latérale étant de 4 à 22.

3. Le capteur de gaz selon l'une des revendications 1 à 2, où le polymère est sélecté du groupe consistant en:
Poly(butyle méthacrylate-co-1,1,1,3,3,3-hexafluoroisopropyl méthacrylate);
Poly(cyclohexyle méthacrylate-co-1,1,1,3,3,3-hexafluoroisopropyl méthacrylate);
Poly(2 éthylhexyle méthacrylate-co-1,1,1,3,3,3-hexafluoroisopropyl méthacrylate);
Poly(dodécyle méthacrylate-co-1,1,1,3,3,3-hexafluoroisopropyl méthacrylate);
Poly(octadécyle méthacrylate-co-1,1,1,3,3,3-hexafluoroisopropyl méthacrylate);
Poly(benzyle méthacrylate-co-1,1,1,3,3,3-hexafluoroisopropyl méthacrylate);
Poly(glycidyle méthacrylate-co-1,1,1,3,3,3-hexafluoroisopropyl méthacrylate);
Poly(butyle méthacrylate-co-2,2,2-trifluoroéthyle méthacrylate);
Poly(cyclohexyle méthacrylate-co-2,2,2-trifluoroéthyle méthacrylate);
Poly(2 éthylhexyle méthacrylate-co-2,2,2-trifluoroéthyle méthacrylate);
Poly(dodécyle méthacrylate-co-2,2,2-trifluoroéthyle méthacrylate);
Poly(octadécyle méthacrylate-co-2,2,2-trifluoroéthyle méthacrylate);
Poly(benzyle méthacrylate-co-2,2,2-trifluoroéthyle méthacrylate);
Poly(glycidyle méthacrylate-co-2,2,2-trifluoroéthyle méthacrylate);
Poly(butyle méthacrylate-co-perfluorooctyléthyle méthacrylate);
Poly(cyclohexyle méthacrylate-co-perfluorooctyléthyle méthacrylate);
Poly(2 éthylhexyle méthacrylate-co-perfluorooctyléthyle méthacrylate);
Poly(dodécyle méthacrylate-co-perfluorooctyléthyle méthacrylate);
Poly(octadécyle méthacrylate-co-perfluorooctyléthyle méthacrylate);
Poly(benzyle méthacrylate-co-perfluorooctyléthyle méthacrylate);
Poly(glycidyle méthacrylate-co-perfluorooctyléthyle méthacrylate);
Poly(butyle méthacrylate-co-2,2,3,3,4,4 hexafluorobutylméthacrylate);
Poly(cyclohexyle méthacrylate-co-2,2,3,3,4,4 hexafluorobutylméthacrylate);
Poly(2 éthylhexyle méthacrylate-co-2,2,3,3,4,4 hexafluorobutylméthacrylate);
Poly(dodécyle méthacrylate-co-2,2,3,3,4,4 hexafluorobutylméthacrylate);
Poly(octadécyle méthacrylate-co-2,2,3,3,4,4 hexafluorobutylméthacrylate);
Poly(benzyle méthacrylate-co-2,2,3,3,4,4 hexafluorobutylméthacrylate);
Poly(glycidyle méthacrylate-co-2,2,3,3,4,4 hexafluorobutylméthacrylate);
Poly(butyle méthacrylate-co-perfluorohexyléthylméthacrylate);
Poly(cyclohexyle méthacrylate-co-perfluorohexyléthylméthacrylate);
Poly(2 éthylhexyle méthacrylate-co-perfluorohexyléthylméthacrylate);
Poly(dodécyle méthacrylate-co-perfluorohexyléthylméthacrylate);
Poly(octadécyle méthacrylate-co-perfluorohexyléthylméthacrylate);
Poly(benzyle méthacrylate-co-perfluorohexyléthylméthacrylate);
Poly(glycidyle méthacrylate-co-perfluorohexyléthylméthacrylate);
Poly(butyle méthacrylate-co-1,1,1,3,3,3-hexafluoroisopropylacrylate);
Poly(cyclohexyle méthacrylate-co-1,1,1,3,3,3-hexafluoroisopropylacrylate);
Poly(2 éthylhexyle méthacrylate-co-1,1,1,3,3,3-hexafluoroisopropylacrylate);
Poly(dodécyle méthacrylate-co-1,1,1,3,3,3-hexafluoroisopropylacrylate);
Poly(octadécyle méthacrylate-co-1,1,1,3,3,3-hexafluoroisopropylacrylate);
Poly(benzyle méthacrylate-co-1,1,1,3,3,3-hexafluoroisopropylacrylate);
Poly(glycidyle méthacrylate-co-1,1,1,3,3,3-hexafluoroisopropylacrylate);
Poly(butyle méthacrylate-co-2,2,2-trifluoroéthyle acrylate);
Poly(cyclohexyle méthacrylate-co-2,2,2-trifluoroéthyle acrylate);
Poly(2 éthylhexyle méthacrylate-co-2,2,2-trifluoroéthyle acrylate);
Poly(dodécyle méthacrylate-co-2,2,2-trifluoroéthyle acrylate);
Poly(octadécyle méthacrylate-co-2,2,2-trifluoroéthyle acrylate);
Poly(benzyle méthacrylate-co-2,2,2-trifluoroéthyle acrylate);
Poly(glycidyle méthacrylate-co-2,2,2-trifluoroéthyle acrylate);
Poly(butyle méthacrylate-co-perfluorohexyléthyle acrylate);
Poly(cyclohexyle méthacrylate-co-perfluorohexyléthyle acrylate);
Poly(2 éthylhexyle méthacrylate-co-perfluorohexyléthyle acrylate);
Poly(dodécyle méthacrylate-co-perfluorohexyléthyle acrylate);
Poly(octadécyle méthacrylate-co-perfluorohexyléthyle acrylate);
Poly(benzyle méthacrylate-co-perfluorohexyléthyle acrylate);
Poly(glycidyle méthacrylate-co-perfluorohexyléthyle acrylate);

4. Le capteur de gaz selon la revendication 3, le groupe de polymère consistant en:
Poly(octadécyle méthacrylate-co-perfluorohexyléthyle méthacrylate);
Poly(octadécyle méthacrylate-co-1,1,1,3,3,3-hexafluoroisopropyl acrylate);
Poly(dodécyle méthacrylate-co-perfluorohexyléthyle méthacrylate);

5. Le capteur de gaz selon l'une ou plusieurs des revendications 1 à 5 où le polymère est réticulé.

6. Utilisation d'un capteur de gaz organique selon les revendications 1 à 5 pour l'analyse des gaz organiques basée sur la réflexion accrue par interférence (IER).
